(19) Europäisches Patentamt

European Patent Office

Office européen des brevets

(11) **EP 1 270 287 B1**

(12) **EUROPÄISCHE PATENTSCHRIFT**

(45) Veröffentlichungstag und Bekanntmachung des Hinweises auf die Patenterteilung:
**14.12.2005 Patentblatt 2005/50**

(51) Int Cl.$^7$: **B60H 1/00**

(21) Anmeldenummer: **02008784.7**

(22) Anmeldetag: **19.04.2002**

(54) **Verfahren zum Regeln der Innenraumtemperatur einer Fahrzeugfahrgastzelle und Heiz- oder Klimaanlage für ein Fahrzeug**

Method for regulating interior temperature of the passenger compartment of a vehicle and heating or air conditioning device for a vehicle

Procédé de réglage de la température intérieure d'un habitacle de véhicule et dispositif de chauffage ou de climatisation pour véhicule

(84) Benannte Vertragsstaaten:
**DE ES FR IT SE**

(30) Priorität: **21.06.2001 DE 10130104**

(43) Veröffentlichungstag der Anmeldung:
**02.01.2003 Patentblatt 2003/01**

(73) Patentinhaber: **Behr GmbH & Co. KG**
**70469 Stuttgart (DE)**

(72) Erfinder:
- **Flik, Markus, Dr.**
**70839 Gerlingen (DE)**
- **Kampf, Hans, Dipl.-Ing.**
**71404 Korb (DE)**

(74) Vertreter: **Grauel, Andreas**
**BEHR GmbH & Co., Intellectual Property,**
**Mauserstrasse 3**
**70469 Stuttgart (DE)**

(56) Entgegenhaltungen:
**EP-A- 1 040 945          GB-A- 2 344 647**

- **PATENT ABSTRACTS OF JAPAN vol. 012, no. 109 (M-682), 8. April 1988 (1988-04-08) & JP 62 238106 A (AUTOMOB ANTIPOLLUT & SAF RES CENTER), 19. Oktober 1987 (1987-10-19)**
- **PATENT ABSTRACTS OF JAPAN vol. 010, no. 014 (M-447), 21. Januar 1986 (1986-01-21) & JP 60 174310 A (MATSUSHITA DENKI SANGYO KK), 7. September 1985 (1985-09-07)**

EP 1 270 287 B1

**Beschreibung**

Die Erfindung betrifft ein Verfahren zum Regeln der Innenraumtemperatur einer Fahrgastzelle eines Fahrzeugs mittels einer Heiz- oder Klimaanlage, gemäß Oberbegriff des Anspruchs 1, und eine Heiz- oder Klimaanlage gemäß Anspruch 11.

Zum automatischen Regeln des Innenraumklimas einer Fahrgastzelle eines Fahrzeugs ist aus der JP 06-239128 ein Verfahren bekannt, bei dem die von den Insassen getragene Bekleidung ermittelt und diese Information zur Einstellung des Innenraumklimas der Fahrgastzelle herangezogen wird. Die Art der Bekleidung der Insassen, also ob er beispielsweise leichte Sommerbekleidung oder warme Winterbekleidung trägt, wird dadurch ermittelt, dass im Fahrzeug mit Hilfe von Sensoren im Bereich der Hüfte, der Oberschenkel, der Unterschenkel und der Füße die Temperatur gemessen und durch einen Vergleich dieser Temperaturen auf die Bekleidungsart des jeweiligen Körperteils geschlossen wird, wobei davon ausgegangen wird, dass die Hüfte immer bekleidet ist. Es hat sich gezeigt, dass diese Regelung nicht in allen Fällen den Anforderungen genügt und daher verbesserungswürdig ist. Weiterhin ist aus der EP 1040945 A2 ein Verfahren zum Betrieb einer Heiz-/Klimaanlage bekannt geworden, nach welcher ein Ist-Temperatur-Korrekturwert aus einem Kennfeld entnommen wird und der Istwert der Temperatur so verändert wird.

Es ist Aufgabe der Erfindung, ein Verfahren der eingangs genannten Art zu schaffen, das eine automatische Regelung der Innenraumtemperatur der Fahrgastzelle in Abhängigkeit der Art der Bekleidung mindestens eines Insassen ermöglicht und bei dem vorzugsweise möglichst unmittelbar nach Belegung eines Sitzplatzes der Fahrgastzelle durch den Insassen eine zuverlässige Bestimmung von der Art seiner Bekleidung vorgenommen werden kann. Ein weiteres Ziel der Erfindung besteht darin, eine zur Durchführung des Verfahrens geeignete Heiz- oder Klimaanlage zu schaffen.

Zur Lösung der Aufgabe wird ein Verfahren mit den Merkmalen des Anspruchs 1 vorgeschlagen. Es dient zum vorzugsweise automatischen Regeln der Innenraumtemperatur einer Fahrgastzelle eines Fahrzeugs, beispielsweise Personenkraftwagen (Pkw) oder Lastkraftwagen (Lkw), mit Hilfe einer Heiz- oder Klimaanlage. Das Verfahren sieht vor, die Art der Bekleidung mindestens eines Insassen im Bereich mindestens einer seiner Körperpartien zu bestimmen, also ob dieser beispielsweise leichte Sommer- oder warme Winterbekleidung trägt, und diese ermittelte Information bei der Einstellung des Sollwerts der Innenraumtemperatur zu berücksichtigen. Das Verfahren zeichnet sich dadurch aus, dass zur Bestimmung der Bekleidung deren Wärmeleitwert ($\lambda_{Bekleidung}$) ermittelt wird. Anhand des Wärmeleitwerts ($\lambda_{Bekleidung}$) kann sehr zuverlässig die Art der Bekleidung bestimmt werden, da üblicherweise leichte beziehungsweise dünne, sommerliche Bekleidung einen hohen Wärmeleitwert ($\lambda_{Bekleidung}$), warme beziehungsweise dicke, winterliche Bekleidung dagegen einen niedrigeren Wärmeleitwert ($\lambda_{Bekleidung}$) aufweist.

Es wird eine Ausführungsform des Verfahrens bevorzugt, bei dem bei einem hohen Wärmeleitwert ($\lambda_{Bekleidung}$) der Bekleidung ein Rückschluss auf leichte beziehungsweise dünne Bekleidung erfolgt und der Sollwert der Innenraumtemperatur angehoben wird, während hingegen bei einem niedrigen beziehungsweise niedrigeren Wärmeleitwert ($\lambda_{Bekleidung}$) der Bekleidung ein Rückschluss auf warme beziehungsweise dicke Bekleidung, die einen hohen Wärmeleitwiderstand aufweist, erfolgt und der Sollwert der Innenraumtemperatur abgesenkt wird.

Nach einer ersten Ausführungsvariante des Verfahrens ist vorgesehen, dass lediglich die Bekleidung des Fahrers des Fahrzeugs zur Regelung des Innenraumklimas der Fahrgastzelle herangezogen wird, da dessen Wohlbefinden hinsichtlich der Fahrsicherheit am wichtigsten ist. Nach einer weiteren Ausführungsvariante wird die Art der Bekleidung von mehreren Fahrzeuginsassen ermittelt, beispielsweise des Fahrers und des daneben sitzenden Beifahrers, wobei aus diesen Informationen beispielsweise ein Mittelwert zur Korrektur des Sollwerts der Innenraumtemperatur gebildet wird. Sofern das Fahrzeug eine Heiz- oder Klimaanlage aufweist, die eine Links/Rechts-Trennung und/oder Vorne/ Hinten-Trennung der Temperaturregelung zur separaten Einstellung der Temperatur von Fahrer- und Beifahrerseite beziehungsweise vorderen und hinteren Plätzen ermöglicht, kann die Innenraumtemperatur im Bereich des jeweiligen belegten Sitzes in Abhängigkeit der Bekleidung des darauf sitzenden Insassen vorgenommen werden.

Weiterhin wird eine Ausführungsform des Verfahrens bevorzugt, bei dem der Wärmeleitwert ($\lambda_{Bekleidung}$) mittels spezifischer Daten eines von dem Insassen besetzten Sitzes, mindestens einer mittels mindestens eines Sensors gemessenen Temperatur ($T_{Sitz}$) des besetzten Sitzes und einer anhand einer realistischen Annahme geschätzten Körpertemperatur ($T_{Körper}$) des Insassen ermittelt, vorzugsweise berechnet wird. In bevorzugter Ausführungsform sind die spezifischen Daten des Sitzes dessen Masse m und dessen spezifische Wärmekapazität $c_p$. Anhand dieser Daten lässt sich der Wärmeleitwert ($\lambda_{Bekleidung}$) der Bekleidung mittels folgender Differenzialgleichung berechnen:

$$(m^*c_p)dT/dt = (\lambda_{Sitz} + \lambda_{Bekleidung})^*(T_{Körper} - T_{Sitz}),$$

wobei ($m^*c_p$) die Wärmekapazität des Sitzes ist.

Nach einer Weiterbildung des erfindungsgemäßen Verfahren ist vorgesehen, dass der vom Insassen auf den Sitz ausgeübte Druck in mindestens einem Flächenbereich erfasst und dessen Einfluss auf den Wärmeleitwert ($\lambda_{Kleidung}$) bei dessen Ermittlung berücksichtigt wird. Dadurch kann der Wärmeleitwert ($\lambda_{Bekleidung}$) noch genauer bestimmt und eine entsprechend präzisere automatische Innenraumtemperaturregelung vorgenommen werden.

Schließlich wird eine Ausführungsform des Verfahrens bevorzugt, bei dem außer der automatischen Innenraumtemperaturregelung in Abhängigkeit des Wärmeleitwerts ($\lambda_{Bekleidung}$) auch die Feuchte der Fahrgastzellenluft in gewünschter Weise geregelt wird, was mittels einer Klimaanlage ohne weiteres realisierbar ist. Das erfindungsgemäße Verfahren ist also auch zur automatischen Innenraumklimaregelung einsetzbar.

Weitere vorteilhafte Ausführungsformen des Verfahrens ergeben sich aus den übrigen Unteransprüchen.

Der Gegenstand der Erfindung betrifft auch eine Heiz- oder Klimaanlage nach Anspruch 11, mittels derer das erfindungsgemäße Verfahren realisierbar ist.

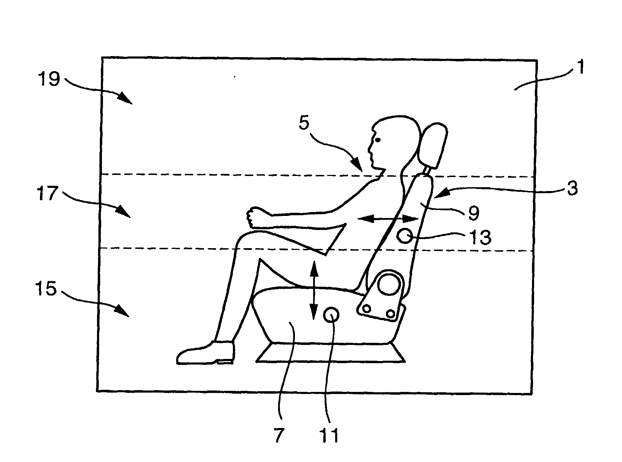

Im Folgenden wird die Erfindung anhand der einzigen Figur näher erläutert, die in schematischer Darstellung einen Ausschnitt einer Fahrgastzelle 1 eines nicht dargestellten Fahrzeugs zeigt. Die Fahrgastzelle 1 umfasst üblicherweise mehrere Sitze, von denen in der Figur lediglich der Sitz 3 erkennbar ist, auf dem in aufrechter Position ein Insasse 5 sitzt. Der Sitz 3 umfasst eine im Wesentlichen horizontal angeordnete Sitzfläche 7 und eine in vertikaler Richtung beziehungsweise leicht schräg dazu verlaufende Rückenlehne 9.

In der Sitzfläche 7 und der Rückenlehne 9 können sich jeweils 1-n Sensoren zur Ermittlung der Sitztemperatur ($T_{Sitz}$) in jeweils einem bestimmten Flächenbereich befinden, von denen in der Figur lediglich der in die Sitzfläche 7 integrierte Temperatursensor 11 und der in der Rückenlehne 9 befindliche Temperatursensor 13 angedeutet sind. Aufgrund ihrer Anordnung im Sitz 3 wird also mittels des Temperatursensors 11 im Unterkörperbereich des Insassen und mit Hilfe des Temperatursensors 13 in dessen Oberkörperbereich gemessen.

In bevorzugter Ausführungsform sind jeweils mindestens zwei, vorzugsweise vier Temperatursensoren im Bereich der Sitzfläche 7 und der Rückenlehne 9 vorgesehen.

Mit Hilfe einer nicht dargestellten Steuereinrichtung, beispielsweise der einer Heiz- oder Klimaanlage des Fahrzeugs, an die die mittels der Sensoren 11, 13 ermittelten Sitztemperaturen übertragen werden, wird für jede dieser Sitztemperaturen ($T_{Sitz}$) jeweils der Wärmeleitwert ($\lambda_{Bekleidung}$) der Bekleidung in diesem Bereich mit folgender Differenzialgleichung berechnet:

$$(m^{*}c_{p})dT/dt = (\lambda_{Sitz} + \lambda_{Bekleidung})^{*}(T_{Körper} - T_{Sitz}),$$

wobei die spezifischen Daten des Sitzes 3, nämlich die Wärmekapazität ($m^{*}c_{p}$) und der Wärmeleitwert ($\lambda_{Sitz}$) bekannt sind und für die Körpertemperatur ($T_{Körper}$) eine realistische Annahme getroffen wird, so dass in der vorstehenden Gleichung nur noch der Wärmeleitwert ($\lambda_{Bekleidung}$) der Bekleidung unbekannt ist und daher berechnet werden kann.

Da typischerweise leichte beziehungsweise dünne, sommerliche Bekleidung einen hohen Wärmeleitwert, dagegen dicke beziehungsweise warme, winterliche Bekleidung einen niedrigeren Wärmeleitwert aufweist, kann anhand der Höhe des Wärmeleitwerts relativ präzise auf die Art der Bekleidung rückgeschlossen werden. Bei einem hohen Wärmeleitwert ($\lambda_{Bekleidung}$) wird der von der Heiz-/Klimaregelung vorgegebene Sollwert der Innenraumtemperatur der Fahrgastzelle 1 angehoben, während er bei einem kleineren Wärmeleitwert ($\lambda_{Bekleidung}$) abgesenkt wird.

Bei dem in der Figur dargestellten Ausführungsbeispiel ist die Fahrgastzelle 1 -wie mit gestrichelten Linien angedeutet- in mehrere gedachte, übereinanderliegende Zonen 15, 17 und 19 unterteilt, denen getrennt voneinander Zuluft mit unterschiedlicher Temperatur zugeführt werden kann. Dies ermöglicht eine Temperaturschichtung innerhalb der Fahrgastzelle 1, das heißt, es kann für jede der Zonen ein unterschiedlicher Temperatursollwert gewählt werden. In der ersten Zone 15 befindet sich der Unterkörperbereich des Insassen in der darüberliegenden zweiten Zone 17 dessen Oberkörperbereich. In der dritten Zone 19 liegt der Kopfbereich des Insassen. Es bleibt festzuhalten, dass ohne weiteres auch mehr als drei Temperaturzonen, beispielsweise vier, oder weniger, beispielsweise nur eine, realisierbar sind.

Da bei dem anhand der Figur beschriebenen Ausführungsbeispiel sowohl für die Bekleidung des Oberkörperbereichs als auch für des Unterkörperbereichs jeweils der Wärmeleitwert ($\lambda_{Bekleidung}$) ermittelt werden kann, ist es möglich, in Abhängigkeit des jeweiligen Wärmeleitwerts ($\lambda_{Bekleidung}$) den Sollwert der Innenraumtemperatur in der zugeordneten Zone entsprechend der Bekleidungsart anzupassen, also anzuheben beziehungsweise abzusenken. Der Insasse kann beispielsweise eine dicke/warme Hose und ein dünnes/leichtes Hemd tragen, so dass im Bereich des Unterkörpers eine geringere Sollwerttemperatur wünschenswert wäre, als im Oberkörperbereich. Die Sollwertanpassung erfolgt über die Steuereinrichtung. Die Einstellung Temperatur-Sollwerte in den Zonen 15, 17, 19 erfolgt über die den Zonen zugeführte Luftmenge, die Luftausblastemperatur sowie die Luftverteilung. Hierzu wird jeweils mindestens eine geeignete Komponente der Heiz- oder Klimaanlage, beispielsweise ein Verdampfer, eine Mischklappe zur Einstellung des Umluft/Außenluftanteils der Zuluft und ein Heizkörper in bekannter Weise entsprechend gesteuert.

Sofern für eine der Temperaturzonen 15, 17, 19 in mehreren Flächenbereichen die Sitztemperatur ($T_{Sitz}$) gemessen wird, kann hieraus eine zonenabhängige Sitzreferenztemperatur, beispielsweise ein Mittelwert, ermittelt werden, die zur Berechnung des Wärmeleitwerts ($\lambda_{Bekleidung}$) der Bekleidung innerhalb dieser Zone herangezogen wird.

Nach allem wird deutlich, dass in der einfachsten Form des erfindungsgemäßen Verfahrens in mindestens einem Flächenbereich des Sitzes dessen Temperatur ($T_{Sitz}$) gemessen, hieraus in der oben beschriebenen Weise der Wärmeleitwert ($\lambda_{Bekleidung}$) der Bekleidung berechnet und der Sollwert der Innenraumtemperatur, der in allen gedachten Zonen der Fahrgastzelle gleich sein kann, entsprechend der Bekleidungsart angehoben oder abgesenkt wird. Sofern an mehreren Stellen des Sitzes 3 dessen Temperatur gemessen wird, kann aus diesen Werten beispielsweise eine Referenztemperatur des Sitzes, beispielsweise der Mittelwert, bestimmt werden, der wiederum zur Berechnung des Wärmeleitwerts ($\lambda_{Bekleidung}$) der Bekleidung eingesetzt wird. Die automatische Innenraumtemperaturregelung kann dann beispielsweise derart erfolgen, dass sich über der Höhe der Fahrgastzelle das Temperaturniveau definiert ändert.

Bei einer vorteilhaften Ausführungsform des Verfahrens ist vorgesehen, dass der Wärmeleitwert ($\lambda_{Bekleidung}$) der Bekleidung kontinuierlich ermittelt wird, wobei der Anfangsphase, also nachdem sich der Insasse auf den Sitz gesetzt hat und die automatische Heiz-/Klimaregelung aktiviert wurde, die höchste Bedeutung zukommt, da die Heiz-/Klimaregelung möglichst früh Informationen über die Bekleidung des Insassen braucht, um entsprechend schnell eine gewünschte Innenraumtemperatur-Sollwertanpassung vornehmen zu können.

**Patentansprüche**

1. Verfahren zum Regeln der Innenraumtemperatur einer Fahrgastzelle eines Fahrzeugs mittels einer Heiz- oder Klimaanlage, wobei die Art der Bekleidung mindestens eines Insassen im Bereich mindestens einer seiner Körperpartien bestimmt und bei der Einstellung des Sollwerts der Innenraumtemperatur berücksichtigt wird, **dadurch gekennzeichnet, dass** zur Bestimmung der Bekleidung deren Wärmeleitwert ($\lambda_{Bekleidung}$) ermittelt wird, wobei an mindestens zwei Stellen die Temperatur des Sitzes (3) gemessen und an jeder dieser Stellen jeweils der Wärmeleitwert ($\lambda_{Bekleidung}$) für die Bekleidung ermittelt wird.

2. Verfahren nach Anspruch 1, **dadurch gekennzeichnet, daß** an vier Stellen die Temperatur des Sitzes (3) gemessen wird.

3. Verfahren nach Anspruch 1 oder 2, **dadurch gekennzeichnet, dass** bei einem hohen Wärmeleitwert ($\lambda_{Bekleidung}$) der Bekleidung ein Rückschluss auf leichte beziehungsweise dünne Bekleidung erfolgt und der Sollwert der Innenraumtemperatur angehoben wird.

4. Verfahren nach einem der vorhergehenden Ansprüche, **dadurch gekennzeichnet, dass** bei einem niedrigen Wärmeleitwert ($\lambda_{Bekleidung}$) der Bekleidung ein Rückschluss auf warme beziehungsweise dicke Bekleidung erfolgt und der Sollwert der Innenraumtemperatur abgesenkt wird.

5. Verfahren nach einem der vorhergehenden Ansprüche, **dadurch gekennzeichnet, dass** der Wärmeleitwert ($\lambda_{Bekleidung}$) mittels spezifischer Daten eines von dem Insassen besetzten Sitzes, mindestens einer gemessenen Temperatur ($T_{Sitz}$) des besetzten Sitzes und einer angenommenen Körpertemperatur ($T_{Körper}$) des Insassen ermittelt, vorzugsweise berechnet, wird.

6. Verfahren nach einem der vorhergehenden Ansprüche, **dadurch gekennzeichnet, dass** der vom Insassen auf den Sitz ausgeübte Druck erfasst und dessen Einfluss auf den Wärmeleitwert ($\lambda_{Bekleidung}$) bei dessen Ermittlung berücksichtigt wird.

7. Verfahren nach einem der vorhergehenden Ansprüche, **dadurch gekennzeichnet, dass** Sitztemperatur in mindestens einen Bereich der Sitzfläche (7) und einer Lehne (9) des Sitzes, insbesondere Rückenlehne, gemessen wird.

8. Verfahren nach einem der vorhergehenden Ansprüche, **dadurch gekennzeichnet, dass** die Innenraumtemperatur der Fahrgastzelle zum Zwecke einer Temperaturschichtung in mehreren, übereinanderliegenden Zonen (15,17,19) einen unterschiedlichen Sollwert aufweist, wobei zumindest ein Teil des Unterkörperbereichs des Insassen in einer ersten Zone und zumindest ein Teil seines Oberkörperbereichs in einer zweiten Zone angeordnet ist.

9. Verfahren nach einem der vorhergehenden Ansprüche, **dadurch gekennzeichnet, dass** sowohl für die Bekleidung des Oberkörperbereichs als auch für die des Unterkörperbereichs des Insassen der Wärmeleitwert ($\lambda_{Bekleidung}$) ermittelt und in Abhängigkeit des jeweiligen Wärmeleitwerts ($\lambda_{Bekleidung}$) der Sollwert der Innenraumtemperatur in der zugeordneten Zone angepasst wird.

10. Verfahren nach einem der vorhergehenden Ansprüche, **dadurch gekennzeichnet, dass** der Wärmeleitwert ($\lambda_{Bekleidung}$) der Bekleidung kontinuierlich ermittelt wird.

11. Heiz- oder Klimaanlage für ein Fahrzeug zur Durchführung des Verfahrens nach einem oder mehreren der vorhergehenden Ansprüche 1 bis 10.

## Claims

1. Process for regulating the internal temperature of a passenger compartment of a vehicle by means of a heating or air-conditioning unit, whereby the kind of clothing of at least one vehicle occupant in the area of at least one of his body parts is determined and taken into account in setting the required value of the internal temperature, **characterized in that** in order to ascertain the type of clothing concerned its heat-conductivity ($\lambda_{clothing}$) is determined, whereby the temperature of the seat is measured at at least two points and the heat-conductivity ($\lambda_{clothing}$) for the clothing is determined at each of these points.

2. Process in accordance with claim 1, **characterized in that** the temperature of the seat (3) is measured at four points.

3. Process in accordance with claims 1 or 2, **characterized in that** at a high level of heat-conductivity ($\lambda_{clothing}$) for the clothing, the latter is assessed as being light and relatively thin and the required value for internal temperature is raised.

4. Process in accordance with one of the preceding claims, **characterized in that** in the case of low levels of heat conductivity ($\lambda_{clothing}$) for the clothing, the latter is taken to be warm, relatively thick clothing, and the required internal temperature value is lowered.

5. Process in accordance with one of the preceding claims, **characterized in that** the heat-conductivity ($\lambda_{clothing}$) is ascertained, preferably calculated, by means of data concerning a seat on which a person occupying the given vehicle is sitting, at least one measured temperature ($T_{seat}$) of the occupied seat and one supposed body temperature ($T_{body}$) of the occupant.

6. Process in accordance with one of the preceding claims, **characterized in that** the pressure exerted on a seat by the occupant is recorded and its influence on heat-conductivity is taken into consideration.

7. Process in accordance with one of the preceding claims, **characterized in that** the seat temperature is measured in at least one area of the surface (7) of the seat and in one rest of the seat (9), particularly the backrest.

8. Process accordance with one of the preceding claims, **characterized in that** the internal temperature of the passenger compartment has, for purposes of temperature layering, a different required value in several zones (15, 17, 19) lying one above another, whereby at least one section of the lower body of the occupant is in a first zone and at least one part of his upper body is in a second zone.

9. Process in accordance with one of the preceding claims, **characterized in that** heat-conductivity ($\lambda_{clothing}$) is determined, and the required value of the internal temperature in the associated zone is adapted on the basis of the given heat-conductivity, both for the occupant's upper-body clothing and for his/her lower-body clothing.

10. Process in accordance with one of the preceding claims, **characterized in that** heat-conductivity of clothing is determined continuously.

11. Heating or air-conditioning unit for a vehicle for carrying out the process in accordance with one or more of the above claims 1 to 10.

## Revendications

1. Procédé de réglage de la température intérieure de l'habitacle d'un véhicule au moyen d'un système de chauffage ou de climatisation, où l'on détermine la nature de l'habillement d'au moins un passager dans la zone d'au moins l'une de ses parties du corps et que l'on prend en compte lors du réglage de la valeur théorique de la température intérieure, **caractérisé en ce que** pour déterminer l'habillement, on détermine sa valeur de conductivité thermique ($\lambda_{habillement}$), où la température du siège (3) est mesurée au moins au niveau de deux emplacements et, au niveau de chacun de ces emplacements, on détermine à chaque fois la valeur de conductivité thermique ($\lambda_{habillement}$) pour l'habillement.

2. Procédé selon la revendication 1, **caractérisé en ce que** la température du siège (3) est mesurée au niveau de quatre emplacements.

3. Procédé selon la revendication 1 ou 2, **caractérisé en ce que**, dans le cas d'une valeur de conductivité thermique élevée ($\lambda_{habillement}$) de l'habillement, on en déduit qu'il s'agit de vêtements légers ou peu épais, et la valeur théorique de la température intérieure est relevée.

**4.** Procédé selon l'une quelconque des revendications précédentes, **caractérisé en ce que**, dans le cas d'une faible valeur de conductivité thermique ($\lambda_{habillement}$) de l'habillement, on en déduit qu'il s'agit de vêtements chauds ou épais, et la valeur théorique de la température intérieure est abaissée.

**5.** Procédé selon l'une quelconque des revendications précédentes, **caractérisé en ce que** la valeur de conductivité thermique ($\lambda_{habillement}$) de l'habillement est déterminée, de préférence calculée, au moyen de données spécifiques d'un siège occupé par le passager, au moins d'une température mesurée ($T_{siège}$) du siège occupé et d'une température corporelle supposée ($T_{corps}$) du passager.

**6.** Procédé selon l'une quelconque des revendications précédentes, **caractérisé en ce que** l'on détecte la pression exercée par le passager, sur le siège, et l'on prend en compte l'influence de cette pression sur la valeur de conductivité thermique ($\lambda_{habillement}$) lorsque l'on détermine sa valeur.

**7.** Procédé selon l'une quelconque des revendications précédentes, **caractérisé en ce que** la température du siège est mesurée dans au moins une zone de la surface du siège (7) et d'un dossier (9) du siège, en particulier du dossier arrière.

**8.** Procédé selon l'une quelconque des revendications précédentes, **caractérisé en ce que** la température intérieure de l'habitacle, pour créer des couches de températures dans plusieurs zones se superposant (15, 17, 19), présente une valeur théorique différente, où au moins une partie de la zone formant la partie inférieure du corps du passager est disposée dans une première zone et au moins une partie de sa zone formant la partie supérieure du corps est disposée dans une deuxième zone.

**9.** Procédé selon l'une quelconque des revendications précédentes, **caractérisé en ce que** l'on détermine la valeur de conductivité thermique ($\lambda_{habillement}$) aussi bien pour les vêtements de la zone formant la partie supérieure du corps, que pour les vêtements de la zone formant la partie inférieure du corps du passager et, en fonction de la valeur de conductivité thermique respective ($\lambda_{habillement}$), la valeur théorique de la température intérieure est adaptée dans la zone associée.

**10.** Procédé selon l'une quelconque des revendications précédentes, **caractérisé en ce que** l'on détermine, de façon continue, la valeur de conductivité thermique ($\lambda_{habillement}$) de l'habillement.

**11.** Système de chauffage ou de climatisation pour un véhicule, permettant de réaliser le procédé selon l'une ou plusieurs des revendications précédentes 1 à 10.